(19) Europäisches Patentamt
European Patent Office
Office européen des brevets

(11) EP 0 700 970 B1

(12) # EUROPÄISCHE PATENTSCHRIFT

(45) Veröffentlichungstag und Bekanntmachung des Hinweises auf die Patenterteilung:
**03.11.1999 Patentblatt 1999/44**

(51) Int Cl.[6]: **C08L 69/00**

(21) Anmeldenummer: **95113607.6**

(22) Anmeldetag: **30.08.1995**

(54) **Blends aus Polycarbonaten, Dimerfettsäurepolyestern und PIB-Kautschuken, Siliconen oder Mineralölen**

Mixtures of polycarbonates, dimer fatty acid polyesters and polyisobutylene rubber, silicones or mineral oils

Mélanges de polycarbonates, de polyesters d'acides gras dimérignes et de caoutchouc de polyisobutylène, de silicones ou d'huiles minérales

(84) Benannte Vertragsstaaten:
**DE ES FR GB IT NL**

(30) Priorität: **12.09.1994 DE 4432379**

(43) Veröffentlichungstag der Anmeldung:
**13.03.1996 Patentblatt 1996/11**

(73) Patentinhaber: **BAYER AG**
**51368 Leverkusen (DE)**

(72) Erfinder:
- **Köhler, Burkhard, Dr.**
  **D-51373 Leverkusen (DE)**
- **Ebert, Wolfgang, Dr.**
  **D-47800 Krefeld (DE)**
- **Horn, Klaus, Dr.**
  **D-41539 Dormagen (DE)**
- **Weider, Richard, Dr.**
  **D-51381 Leverkusen (DE)**
- **Scholl, Thomas, Dr.**
  **D-51469 Bergisch Gladbach (DE)**

(56) Entgegenhaltungen:
**EP-A- 0 108 996** **DE-A- 4 132 079**
**GB-A- 2 057 464** **US-A- 4 335 032**

- **DATABASE WPI Week 9438 Derwent Publications Ltd., London, GB; AN 94-308839 & KR-B-9 310 235 (KOLON IND INC) , 15.Oktober 1993**
- **DATABASE WPI Week 9333 Derwent Publications Ltd., London, GB; AN 93-261824 & JP-A-05 179 128 (KANEBO LTD) , 20.Juli 1993**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 700 970 B1

## Beschreibung

Die Erfindung betrifft Blends aus Polycarbonaten, verzweigten, phenolisch hydroxyfunktionellen Dimerfettsäurepolyestern und mindestens einer Komponenten ausgewählt aus Polyisobutylen, Siliconen und Mineralölen. Diese Mischungen weisen eine gute Tieftemperaturzähigkeit auf.

Gegenstand der Erfindung sind daher Mischungen enthaltend

A) 65-96,5, vorzugsweise 80-95 Gew.-% aromatisches Polycarbonat,

B) 0,5-20, vorzugsweise 1-10 Gew.-% phenolisch hydroxyfunktionelle verzweigte Dimerfettsäurepolyester,

und mindestens eine Komponente ausgewählt aus

C) 1-25, vorzugsweise 4-10 Gew.-% Polyisobutylen,

D) 1-25, vorzugsweise 4-10 Gew.-% Siliconöl,

E) 1-25, vorzugsweise 4-10 Gew.-% Mineralöl,

wobei die Summe aus A+B+C+D+E 100 ergibt.

**Komponente A)**

Die erfindungsgemäß geeigneten, thermoplastischen Polycarbonate gemäß Komponente A) können sowohl Homo- als auch Copolycarbonate aus den Diphenolen der Formel (I) sein,

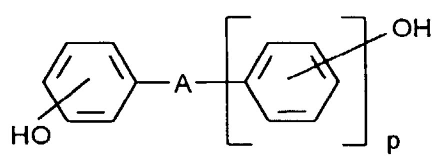

(I)

worin

p 1 oder Null ist und

A eine Einfachbindung, $C_1$-$C_5$-Alkylen, $C_2$-$C_5$-Alkyliden, gegebenenfalls durch Methylgruppen substituiertes $C_5$-$C_6$-Cycloalkyliden, -O-, -S- und-$SO_2$- sein können.

Die Polycarbonate gemäß Komponente A) können sowohl linear als auch verzweigt sein, sie können aromatisch gebundene Methylgruppen enthalten und sind halogenfrei. Die Polycarbonate der Komponente A) können sowohl einzeln als auch im Gemisch eingesetzt werden.

Die Diphenole der Formel (I) sind entweder literaturbekannt oder nach literaturbekannten Verfahren herstellbar. Die Herstellung der erfindungsgemäß geeigneten Polycarbonate gemäß Komponente A) ist ebenfalls literaturbekannt und kann z.B. mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird.

Geeignete Diphenole der Formel (I) sind z.B. Hydrochinon, Resorcin, 4,4'-Diphydroxydiphenyl, 2,2-Bis(4-hydroxyphenyl)-propan (Bisphenol A) 2,4-Bis-(4-hydroxyphenyl)-2-methylbutan, 2,2-Bis-(4-hydroxy-3,5-dimethylphenyl)-propan, 1,1-Bis-(4-hydroxyphenyl)-cyclohexan oder 1,1-Bis-(4-hydroxyphenyl-)-3,3,5-trimethylcyclohexan. Bevorzugte Diphenole der Formel (I) sind 2,2-Bis-(4-hydroxyphenyl)-propan und 1,1-Bis-(4-hydroxyphenyl)3,3,5-trimethylcyclohexan. Es können auch Mischungen von Diphenolen eingesetzt werden, z.B. aus Bisphenol A und bis zu 60 Mol-% 1,1-Bis-(4-hydroxyphenyl)-3,3,5-trimethylcyclohexan.

Geeignete Kettenabbrecher sind z.B. Phenol oder p-tert.-Butylphenol, aber auch langkettige Alkylphenole wie 4-(1,3-Tetramethyl-butyl)-phenol gemäß DE-OS 2 842 005 oder Monoalkylphenole oder Dialkylphenole mit insgesamt 8 bis 20 C-Atomen in den Alkylsubstituenten gemäß deutscher Patantanmeldung 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(2,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (I.).

Die erfindungsgemäß geeigneten Polycarbonate gemäß Komponente A) können in bekannter Weise verzweigt sein, und zwar vorzugsweise durch den Einbau von 0,05 bis 2,0 Mol-%, bezogen auf die Summe der eingesetzten Diphenole, an drei- oder mehr als dreifunktionellen Verbindungen, z.B. solchen mit drei oder mehr als drei phenolischen OH-Gruppen.

Die erfindungsgemäß geeigneten Polycarbonate haben mittlere Gewichtsmittelmolekulargewichte $\overline{M}_w$, gemessen z.B. durch Ultrazentrifugation oder Streulichtmessung) von 10 000 bis 200 000, vorzugsweise von 20 000 bis 80 000.

**<u>Komponente B</u>**

Die Dimerfettsäurepolyester sind bekannt und in DE-OS 4 132 079 beschrieben. Bei den Dimerfettsäurepolyestern handelt es sich um verzweigte Polyester mit phenolischen OH-Gruppen und mit mittleren Zahlenmittelmolekulargewichten $\overline{M}_n$ (gemessen durch Gelchromatographie) von 400 bis 200 000, vorzugsweise von 2 000 bis 100 000 und insbesondere von 3 000 bis 50 000. Die Polyester werden hergestellt, indem man $C_{36}$ bis $C_{44}$-Dimerfettsäuren mit Dialkoholen nach den bekannten Umesterungsverfahren umsetzt, wobei 0,5 bis 10, vorzugsweise 1 bis 5 Mol-% an Verzweigern und 1 bis 20, vorzugsweise 3 bis 20 Mol-% an Hydroxyarylcarbonsäuren oder ihre Ester mit $C_1$-$C_6$-Alkoholen als Kettenabbrecher eingesetzt werden, bezogen jeweils auf Mole Dimerfettsäure.

Anstelle der Dicarbonsäure können auch in bekannter Weise deren Anhydride oder Alkylester für die Polyestersynthese eingesetzt werden.

Bevorzugte Dicarbonsäuren sind $C_{36}$- und $C_{44}$-Dimerfettsäure, die auch bis zu 20 Gew.-% Mono- oder Tricarbonsäuren oder ungesättigte Säuren enthalten können.

Geeignete Dialkohole sind beliebige aliphatische oder cycloaliphatische Glykole, die auch aromatische Reste eingebaut haben können, wie (Oligo)ethylenglykol, (Oligo)propylenglykol-(1,2) und -(1,3), Butylenglykol-(1,4) und -(2,3), Hexandiol-(1,6), Octandiol-(1,8), Neopentylglykol, Cyclohexandimethanol, (1,4-Bis-hydroxymethylcyclohexan), 2-Methyl-1,3-propandiol, Trimethylolpropanmonoallylether, Polyallylglycidylether oder Copolymerisate des Allylglycidylethers mit Propylenoxid oder Ethylenoxid, Glycerinmonoallylether oder OH-terminierte, bis-funktionelle Kautschukoligomere, wie z.B. Dihydroxyoligobutadien und Bis-2,3(4-hydroxyethoxyphenyl)propan. Vorzugsweise werden Hexandiol-(1,6-, Butylenglycol-(1,4) und Neopentylglycol verwendet.

Geeignete Verzweiger sind Polyalkohole mit 3 oder mehr alkoholischen OH-Gruppen, Polycarbonsäuren mit 3 oder mehr Carbonsäure-Substituenten, Hydroxycarbonsäuren mit aliphatischen OH- und Carbonsäure-Funktionen, wobei mindestens 3 dieser Funktionen vorliegen müssen.

Beispiele dafür sind Trimethylolpropan, Pentaerythrit, Trimethylolethan, Glycerin, Diglycerin, Bistrimethylolpropen, Bispentaerythrit, 1,2,6-Trihydroxyhexan, Mannit, Sorbit, Trimesinsäure, Trimellithsäure, Zitronensäure, Weinsäure, Trimerfettsäure, bevorzugt Trimethylolpropan oder Pentaerythrit.

Geeignete phenolische Kettenabbrecher sind Hydroxyarylcarbonsäuren wie beispielsweise p-Hydroxybenzoesäure, m-Hydroxybenzoesäure, Salicylsäure, 4-Hydroxyzimtsäure, 3-Hydroxyzimtsäure oder Phloretinsäure oder deren Estern mit $C_1$-$C_6$-Alkoholen. Vorzugsweise werden m- oder p-Hydroxybenzoesäuren oder ihre Ester mit $C_1$-$C_6$-Alkoholen eingesetzt.

Neben der erfindungsgemäß einzusetzenden Kettenabbrechern können auch aliphatische oder aromatische Monocarbonsäuren oder deren Ester mit aliphatischen Alkoholen als Kettenabbrecher mitverwendet werden. Geeignete Monocarbonsäuren sind Stearinsäure, Ölsäure, Linolsäure, Linolensäure, Benzoesäure oder tert.-Butylbenzoesäure.

Geignete Katalysatoren für die Polyesterherstellung sind die bekannten Umesterungskatalysatoren, wie beispielsweise Zinnverbindungen oder Titanverbindungen.

Die Herstellung der Polyester erfolgt durch Mischen der Komponenten, wobei die Umsetzung mit oder ohne Umesterungskatalysatoren verläuft, und zwar bei Temperaturen von 150°C bis 250°C, vorzugsweise von 180°C bis 220°C und bei einer Reaktionszeit von 2 bis 20 Stunden; hierbei werden niedermolekulare Substanzen abdestilliert und bevorzugt am Ende der Reaktion 0,5 bis 6 Stunden lang ein Vakuum von 0,2 bis 100 mbar angelegt.

Polyisobutylene gemäß Komponente C) der vorliegenden Erfindung sind kationische Polymerisate von Olefinen und gegebenenfalls Dienen mit einem Gehalt von mindestens 85 % Isobutylen. Polyisobutylene sind unter dem Stichwort "Polyisobutylene" auf Seite 3539, Band 5, in Römpp Chemie Lexikon, 9. Auflage, 1992, Georg Thieme Verlag beschrieben. Die Molmasse der erfindungsgemäß zu verwendenden Polyisobutylene beträgt 10 000 bis 5 000 000, vorzugsweise 100 000 bis 1 200 000 g/mol. Diese wird ermittelt durch Lichtstreuung.

Als Comonomere für Isobutylen geeignete Diene sind beispielsweise Butadien, Isopren, 2-Chlorbutadien-(1,4), 2-Brombutadien-(1,3), Pentadien, Hexadien, 2-Ethylbutadien-(1,3), 2-Propylbutadien-(1,3), 2-Phenylbutadien-(1,3), 2-Methylpentadien-(1,3) oder 3-Propylhexadien.

Andere geeignete olefinische Comonomere sind Styrol, $\alpha$-Methylstyrol, m/p-Methylstyrol oder Divinylbenzol.

Derartige Produkte sind im Handel als Butylkautschuke erhältlich.

Komponente D im Sinne der Erfindung sind Silicone, wie sie im Houben-Weyl, Methoden der Organischen Chemie, 4. Auflage, E20, Teil 3, Seite 2211-2232 beschrieben sind. Es handelt sich um Polydialkylsiloxan und/oder Polyalkylarylsiloxane und/oder Polydiarylsiloxane, vorzugweise Polydialkylsiloxane, besonders bevorzugt Polydimethylsiloxane. Die Polysiloxane haben im allgemeinen ein mittleres Molekulargewicht von 100 000 bis 10 000 000, vorzugsweise 400 000 bis 5 000 000.

Komponente E im Sinne der Erfindung sind verzweigte oder unverzweigte Gemische von Kohlenwasserstoffen, die vorzugsweise flüssig sind und einen Siedepunkt über 360°C aufweisen. Mineralöle sind in Römpps Chemie Lexikon, Band 4, 8. Aufl., Franckh'sche Verlaghandlung, Stuttgart, Seite 2622 beschrieben, Paraffinöle unter dem Stichwort "Parrafin" in Römpps Chemie Lexikon, Band 4, 8. Aufl., Franckh'sche Verlagshandlung, Stuttgart, Seite 2991 beschrieben.

Die bevorzugte Mineralöle sind aliphatisch und weisen einen Siedepunkt > 360°C auf.

Die erfindungsgemäßen Formmassen können ferner übliche Additive wie Gleit- und Entformungsmittel, Fließmittel, Nukleiermittel, Antistatika, Stabilisatoren, Füll- und Verstärkungsmittel sowie Farbstoffe und Pigmente enthalten. Bevorzugte Verstärkungsstoffe sind Glasfasern, bevorzugte Füllstoffe Glaskugeln, Glimmer, Quarz, Talkum, Wollastonit und bevorzugte Pigmente Ruß und Titandioxid.

Die erfindungsgemäßen thermoplastischen Formmassen werden hergestellt, indem man die jeweiligen Bestandteile in bekannter Weise vermischt und bei Temperaturen von 220°C bis 360°C in üblichen Aggregaten wie Innenknetern, Extrudern oder Doppelwellenschnecken schmelzcompoundiert oder Lösungen der Komponenten A)-E) gemeinsam auf einem Ausdampfextruder eindampft.

Gegenstand der vorliegenden Erfindung ist somit auch ein Verfahren zur Herstellung von thermoplastischen Polycarbonatformmassen, bestehend aus den Komponenten A) bis E), das dadurch gekennzeichnet ist, daß man die jeweiligen der vorstehend genannten Bestandteile in bekannter Weise vermischt und danach bei Temperaturen von 220°C bis 360°C in üblichen Aggregaten schmelzcompoundiert oder schmelzextrudiert oder Lösungen der Komponente A)-E) gemeinsam auf einen Ausdampfextruder eindampft, wobei man die Komponenten A)-E) einzeln oder zusammen in organischen Lösungsmitteln, wie z.B. Toluol, Xylol, Chlorbenzol, Mesitylen, Methylenchorid, Ligroin, Cyclohexan, vorzugsweise Chlorbenzol und/oder Methylenchlorid löst, die Lösungen mischt und sie auf dem Ausdampfextruder im Vakuum (0,5-100 mbar) ein dampft, wobei die Schmelze Temperaraturen von 250-380°C erreicht.

Gegenstand ist ferner die Verwendung der thermoplastischen Formmassen zur Herstellung von Formkörpern sowie die daraus hergestellten Formkörper.

Die erfindungsgemäßen Mischungen lassen sich zu Formkörpern durch Extrusion oder Spritzguß verarbeiten, die sich durch eine verbesserte Tieftemperaturzähigkeit und Benzinbeständigkeit auszeichnen.

Die erfindungsgemäßen Mischungen zeichnen sich durch eine verbesserte Zähigkeit aus und dienen zur Herstellung schlagfester Gehäuse für elektrische Geräte, Haushaltsgeräte, Spielzeug oder im Automobilbau.

Die Silicon-haltigen Mischungen zeichnen sich durch eine extreme Tieftemperaturbeständigkeit aus und können in allen Bereichen der Kühltechnik eingesetzt werden.

## Beispiele

### Komponenten:

Als Polycarbonat wird ein Bisphenol-A-Polycarbonat mit einer relativen Lösungsviskosität von 1,28 (gemessen an einer 0,5 %igen Lösung in Methylenchlorid bei 20°C) eingesetzt.

Als Dimerfettsäure-Polyester (Dim-Polyester) wird ein phenolisch hydroxyfunktioneller, verzweigter Dimerfettsäurepolyester gemäß DE-OS 4 132 079, Beispiel Al, eingesetzt:

Man mischt 288,5 g (0,5 mol) $C_{36}$-Dimerfettsäure, 50 g (0,5 mol) Adipol (1,6-Hexandiol), 6,9 g (0,05 mol) 4-Hydroxybenzoesäure, 2,7 g (0,02 mol) Trimethylolpropan, 0,2 g Hydrochinon und 0,2 g Dibutylzinnoxid. Man erhitzt 2 h auf 180°C und 4 h auf 220°C und erhält 303,57 g des Dimerfettsäurepolyesters mit einem Gehalt von 0,35 % phenolischem OH, einer OH-Zahl (aliphatisches OH) von 16 und einer Säurezahl von 4.

Als PIB-Kautschuk wird ein Polyisobutylen mit 2 % Isopren als Comonomer und einer Molmasse von 400 000 eingesetzt.

Als Silicon wird ein Polydimethylsiloxan der Molmasse 2 000 000 eingesetzt.

Als Mineralöl wird ein von der Fa. Aldruck unter der Bezeichnung White, heavy erhältliches Mineralöl eingesetzt (Siedepunkt > 360°C).

**Prüfbedingungen**

Das Spannungsrißverhalten wurde an Stäben der Abmessung 80x10x4 mm untersucht. Als Testmedium wurde eine Mischung aus 50 Vol.-% Toluol und 50 Vol.-% Isooctan verwendet. Die Probekörper wurden mittels einer Kreisbogenschablone vorgedehnt (Vordehnung 1 %) und bei Zimmertemperatur im Testmedium gelagert. Das Spannungsrißverhalten wurde über die Rißbildung bzw. den Bruch in Abhängigkeit von der Expositionszeit im Testmedium beurteilt.

Die Kerbschlagzähigkeit wurde nach ASTM D 256 bestimmt.

Man stellt eine Mischung aus Polycarbonat und Dimerfettsäure-Polyester (Dim-Masterbatch) her, welches dann mit den übrigen Komponenten gemischt wird.

**Herstellung eines Dim-Masterbatch**

Man löst 1 800 g Polycarbonat und 200 g Dim-Polyester in einer Mischung aus 4 l Chlorbenzol und 8 l Methylenchlorid und dampft die Lösung im Ausdampfextruder (ZSK 32 mit Vakuumdom) bei 280°C ein.

**Beispiel 1** (erfindungsgemäß)

Man löst 1440 g Polycarbonat und 400 g Dim-Masterbatch in 2,5 l Chlorbenzol und 8 l Methylenchlorid und gibt die Lösung von 160 g Polyisobutylen in 1440 g Chlorbenzol hinzu und dampft die Lösung der Komponenten auf dem Ausdampfextruder (ZSK 32 mit Vakuumdom) bei 280°C ein. Die Mischung enthält 90 Gew.-% Polycarbonat, 2 Gew.-% DIM-Polyester und 8 Gew.-% Polyisobutylen.

Man erhält ein Material, daß bei -20°C Zähbruch zeigt und im Spannungsrißversuch keine Risse zeigt.

**Beispiel 2** (erfindungsgemäß)

Man löst 1840 g Dim-Masterbatch in 2,5 l Chlorbenzol und 8 l Methylenchlorid und gibt die Lösung von 160 g Polyisobutylen in 1440 g Chlorbenzol hinzu und dampft die Lösung der Komponenten auf dem Ausdampferextruder (ZSK 32 mit Vakuumdom) bei 280°C ein. Die Mischung enthält 82,8 Gew.-% Polycarbonat, 9,2 Gew.-% Dim-Polyester, 8 Gew.-% Polyisobutylen.

Man erhält ein Material, daß bei -30°C Zähbruch zeigt und im Spannungsrißversuch keine Risse zeigt. Auch nach 20-minütiger Exposition treten keine Risse auf.

**Beispiel 3** (erfindungsgemäß)

Man löst 1440 g Polycarbonat und 400 g Dim-Masterbatch in 4 l Chlorbenzol und 6,5 l Methylenchlorid und gibt die Lösung von 160 g Silicon in 1,5 l Methylenchlorid hinzu und dampft die Lösung der Komponenten auf dem Ausdampfextruder (ZSK 32 mit Vakuumdom) bei 280°C ein.

Die Mischung enthält 90 Gew.-% Polycarbonat, 2 Gew.-% Dim-Polyester, 8 Gew.-% Silicon.

Man erhält ein Material, daß bei -60°C Zähbruch zeigt und im Spannungsrißversuch keine Risse zeigt.

**Beispiel 4** (erfindungsgemäß)

Man löst 1440 g Polycarbonat und 400 g Dim-Masterbatch in 4 l Chlorbenzol und 6 l Methylenchlorid und gibt die Lösung von 80 g Silicon in 1 l Methylenchlorid und 80 g Polyisobutylen in 720 g Chlorbnezol hinzu und dampft die Lösung der Komponenten auf dem Ausdampfextruder (ZSK 32 mit Vakuumdom) bei 280°C ein.

Die Mischung enthält 90 Gew.-% Polycarbonat, 2 Gew.-% Dim-Polyester, 4 Gew.-% Polyisobutylen und 4 Gew.-% Silicon.

Man erhält ein Material, daß bei -60°C einen Zäh-Sprödübergang hat und im Spannungsrißversuch keine Risse zeigt.

**Beispiel 5** (erfindungsgemäß)

Man löst 1560 g Polycarbonat und 400 g Dim-Masterbatch in 2,5 l Chlorbenzol und 8 l Methylenchlorid, gibt 40 g Mineralöl hinzu und dampft die Lösung der Komponente auf dem Ausdampfextruder (ZSK 32 mit Vakuumdom) bei 280°C ein.

Die Mischung enthält 96 Gew.-% Polycarbonat, 2 Gew.-% Dim-Polyester, 2 Gew.-% Mineralöl.

Man erhält ein Material, daß bei -40°C Zähbruch zeigt.

Nach 50-stündigem erhitzen auf 130°C im Vakuum (20 Torr) ist keine Gewichtsabnahme und keine optische Veränderung (Ausschwitzen) festzustellen.

## Patentansprüche

1. Thermoplastische Formmassen enthaltend

   A) 65-96,5 Gew.-% aromatisches Polycarbonat,

   B) 0,5-20 Gew.-% phenolisch hydroxyfunktionelle verzweigte Dimerfettsäurepolyester

   und mindestens eine Komponente ausgewählt aus

   C) 1-25 Gew.-% Polyisobutylen,

   D) 1-25 Gew.-% Siliconöl und

   E) 1-25 Gew.-% Mineralöl,

   wobei die Summe aus A+B+C+D+E 100 ergibt.

2. Thermoplastische Formmassen gemäß Anspruch 1 enthaltend 80-95 Gew.% aromatisches Polycarbonat, 1-10 Gew.-% Dimerfettsäurepolyester, und mindestens eine Komponente ausgewählt aus 4-10 Gew.-% Polyisobutylen, 4-10 Gew.-% Siliconöl, 4-10 Gew.-% Mineralöl.

3. Verfahren zur Herstellung von thermoplastischen Formmassen gemäß Anspruch 1, wobei die jeweiligen Bestandteile vermischt und bei Temperaturen von 220 bis 360°C schmelzcompoundiert oder Lösungen der Komponenten A)-E) auf einen Ausdampfextruder eingedampft werden.

4. Verwendung der thermoplastischen Formmassen gemäß Anspruch 1 zur Herstellung von Formkörpern.

5. Formkörper, hergestellt aus thermoplastischen Formmassen gemäß Anspruch 1.

## Claims

1. Thermoplastic moulding compositions containing

   A) 65 - 96.5 of aromatic polycarbonate,

   B) 0.5 to 20 wt.% of phenolic hydroxy functional branched dimeric fatty acid polyester,

   and at least one component selected from

   C) 1 - 25 wt.% of polyisobutylene,

   D) 1 - 25 wt.% of silicone oil and

   E) 1 - 25 wt.% of mineral oil,

   wherein the sum of A+B+C+D+E is 100.

2. Thermoplastic moulding compositions according to Claim 1 containing 80-95 wt.% of aromatic polycarbonate, 1-10 wt.% of dimeric fatty acid polyester and at least one component selected from 4-10 wt.% of polyisobutylene, 4-10 wt.% of silicone oil,
   4-10 wt.% mineral oil.

**3.** A process for preparing thermoplastic moulding compositions in accordance with Claim 1, wherein the particular components are mixed and melt-compounded at temperatures of 220 to 360°C or solutions of components A) -E) are evaporated in a vaporising extruder.

**4.** Use of thermoplastic moulding compositions in accordance with Claim 1 to produce moulded items.

**5.** Moulded items prepared from moulding compositions in accordance with Claim 1.

**Revendications**

**1.** Matières moulables thermoplastiques contenant :

A) de 65 à 96,5 % en poids de polycarbonate aromatique,
B) de 0,5 à 20 % en poids de polyester d'acide gras dimère ramifié à fonctionnalité hydroxyle phénolique,

et au moins un composant choisi parmi :

C) de 1 à 25 % en poids de polyisobutylène,
D) de 1 à 25 % en poids d'huile silicone,
E) de 1 à 25 % en poids d'huile minérale,

la somme de A+B+C+D+E étant égale à 100.

**2.** Matières moulables thermoplastiques selon la revendication 1, contenant de 80 à 95 % en poids de polycarbonate aromatique, de 1 à 10 % en poids de polyester d'acide gras dimère et au moins un composant choisi parmi 4 à 10 % en poids de polyisobutylène, 4 à 10 % en poids d'huile silicone, 4 à 10 % en poids d'huile minérale.

**3.** Procédé de fabrication de matières moulables thermoplastiques selon la revendication 1, dans lequel on mélange les différents ingrédients et on effectue un compoundage en fusion à des températures de 220 °C à 360 °C ou bien on concentre des solutions des composants A) à E) dans une extrudeuse à évaporation.

**4.** Utilisation des matières moulables thermoplastiques selon la revendication 1 pour fabriquer des pièces de forme.

**5.** Pièces de forme fabriquées à partir de matières moulables thermoplastiques selon la revendication 1.